Europäisches Patentamt

European Patent Office

Office européen des brevets

(11) Publication number: **0 144 705**
**B1**

(12) **EUROPEAN PATENT SPECIFICATION**

(45) Date of publication of patent specification: **28.03.90**

(51) Int. Cl.⁵: **G 11 B 7/24, C 08 G 59/42**

(21) Application number: **84113028.9**

(22) Date of filing: **29.10.84**

(54) Optical recording medium and process for producing the same.

(30) Priority: **06.12.83 JP 229196/83**
**04.07.84 JP 137250/84**
**19.07.84 JP 148589/84**

(43) Date of publication of application:
**19.06.85 Bulletin 85/25**

(45) Publication of the grant of the patent:
**28.03.90 Bulletin 90/13**

(84) Designated Contracting States:
**DE FR GB NL**

(56) References cited:
**US-A-4 415 138**

**PATENT ABSTRACTS OF JAPAN, vol. 6, no. 27
(P-102)905r, 17th February 1982; & JP - A - 56
145 530**

**PATENT ABSTRACTS OF JAPAN, vol. 6, no. 145
(P-132)1023r, 4th August 1982; & JP - A - 57
66547**

(73) Proprietor: **SUMITOMO BAKELITE COMPANY
LIMITED**
**2-2, Uchisaiwaicho 1-chome Chiyoda-ku
Tokyo 100 (JP)**

(72) Inventor: **Tsuge, Morio**
**422-31, Karibacho**
**Hodogaya-ku Yokohama (JP)**
Inventor: **Suzuki, Setsuo**
**1611-3, Kamigocho**
**Totsuka-ku Yokohama (JP)**
Inventor: **Nakayama, Syoichi**
**Sumitomo-Totsukaso 32-36, Hirado-2-chome**
**Totsuka-ku Yokohama (JP)**
Inventor: **Sakamoto, Yushi**
**1-6-203, Konandai-5-chome**
**Konan-ku Yokohama (JP)**
Inventor: **Morishita, Koji**
**5-19, Numama-3-chome**
**Zushi-shi (JP)**

(74) Representative: **Henkel, Feiler, Hänzel & Partner**
**Möhlstrasse 37**
**D-8000 München 80 (DE)**

Courier Press, Leamington Spa, England.

**Description**

This invention relates to an optical recording medium (optical disk recording medium) on which information can be written, read and erased by use of a laser light and which comprises a transparent substrate consisting of a cast-cured product of an epoxy resin composition and an information-recording layer provided thereon, and to a process for producing the optical recording medium.

Recently, attention has been directed to an optical information-recording medium from the standpoint of a high density record, and extensive research thereon has been made. As a result, some media are now commercially available.

These available optical recording media are of the READ-ONLY type, DRAW type, ERASABLE type and the like.

An object of this invention is to impart better properties and performances than those of conventional media to the optical recording media of the DRAW type and the ERASABLE type.

Heretofore, the so-called DRAW type optical recording media have been generally those in which a low melting point metal such as tellurium, selenium, bismuth, or the like or a complex of the metal with an organic material is vapor-deposited as a recording layer on a transparent substrate having a guide groove thereon, and when a modulated laser light is applied to this layer, this layer is melted at the irradiated spot, after which the molten material shrinks owing to the influence of surface tension, whereby a pore having an edge is formed in the recording layer.

Moreover, the ERASABLE type optical recording media are those in which a film of a rare earth transition metal series magnetic alloy such as Tb-Gd-Fe or the like is formed by a spattering method or the like as a recording layer on the substrate. When a laser light is applied to this layer while applying a weak magnetic field thereto from the exterior, magnetization is reversed, whereby information is recorded.

The substrate which has heretofore been used in such an optical recording medium is a glass plate or a transparent synthetic resin plate, and there has been used a material which is optically isotropic in order to satisfy the requirement that the substrate is free from double refraction (birefringence). The transparent synthetic resin plate has been a molded article of polymethyl methacrylate (PMMA), polysulfone (PS) polycarbonate (PC), polyvinyl chloride (PVC), a copolymer of vinyl chloride and vinyl acetate or the like.

At present, a PMMA substrate formed by injection molding is in most cases used in view of moldability and optical transparency.

However, in the case of PMMA substrate, the enhancement of recording density is required, and the following disadvantages have become a serious problem because the high reliability of medium has become required:

(a) The substrate is inferior in thermal resistance, so that when the temperature of the surface of the substrate rises when vapor-depositing various functional films thereon, the guide groove becomes flat and comes not to work.

(b) Since the resin is thermoplastic, there are some cases where creep appears owing to the centrifugal force caused by high speed revolution at the time of access. Moreover, when it is exposed to high temperature during storage deformation is caused, whereby it follows that the substrate pitches and rolls when rotated.

(c) Since the moisture absorption is large, such problems are caused that deformation due to moisture absorption occurs and oxidation of functional film is accelerated.

(d) Since the article is formed by injection molding, the article has a molding stress and double refraction appears.

(e) Adjustment of index of refraction is difficult and the index of refraction is limited to that of the resin per se.

On the other hand, PC is richer in thermal resistance than PMMA, but the double refraction is as great as 80 nm (double path) or more due to the stress during molding. Therefore, PC cannot be formed into a substrate for high quality optical recording medium of the DRAW AND ERASABLE type.

The present inventors have examined the characteristics of various resins as substrates to solve the above problems simultaneously, and as a result, have found that substrates obtained by cast-curing a thermosetting resin, which has been considered to be impossible to cast, particularly an alicyclic epoxy resin or a mixture of an aromatic epoxy resin and an alicyclic epoxy resin are excellent.

According to this invention, there is provided an optical recording medium on which information can be optically written, read and erased by use of a laser light, and which comprises a transparent substrate of a synthetic resin and an information-recording layer attached to the surface of the substrate, characterized in that the transparent substrate is composed of a cast-cured product of an epoxy resin composition comprising an alicyclic epoxy resin or a mixture of an alicyclic epoxy resin and an aromatic epoxy resin, an organic polybasic acid anhydride, a curing accelerator and an anti-discoloring (anti-oxidizing) agent. When the cast-cured product of the above epoxy resin composition is applied to the substrate for optical recording medium, quite unexpected performance is obtained.

The alicyclic epoxy resin or aromatic epoxy resin used in this invention is normally liquid, and includes, for example, alicyclic epoxy resins such as dipentene dioxide, vinylcyclohexene dioxide, 3,4-epoxy-6-methylcyclohexylmethyl 3,4-epoxy-6-methylcyclohexanecarboxylate, 3,4-epoxycyclohexylmethyl 3,4-epoxycyclohexanecarboxylate, and the like; and aromatic epoxy resins such as liquid bisphenol A type

EP 0 144 705 B1

resins, liquid novolac type epoxy resins and the like.

In particular, alicyclic epoxy resins are preferably used because they are low in viscosity and hence excellent in castability, and in addition, cured products having a high glass transition temperature (Tg) are obtained).

Moreover, the use of a mixture of these epoxy resins is very effective in this invention, and a mixture of a major amount of an alicyclic epoxy resin and a minor amount of an aromatic epoxy resin, specifically a liquid bisphenol A type resin, is important because the index of refraction of the cured product can be varied appropriately in the range of from 1.50 to 1.60 depending upon the proportion of the resins mixed.

The proportion of the resins mixed is also important, and it has been found that the relation between the mixing ratio and the index of refraction is linear. Therefore, a transparent substrate having any desired index of refraction can be obtained by selecting a proper mixing ratio.

For the substrate for optical recording media, the mixing ratio of the aromatic epoxy resin to the alicyclic epoxy resin is preferably 9:1—0:10, and if the proportion of the aromatic epoxy resin is larger than this range the index of refraction becomes large.

When the alicyclic epoxy resin is used alone or in a major amount, there is a tendency of the index of refraction becoming small and there is an advantage of indicating a light transmission of 91% or more at 830 nm.

If a flame-retardance is required, a brominated epoxy resin may be applied, but in this case, the index of refraction becomes large.

The organic polybasic acid anhydrides used as the curing agent in this invention are required to have a high consistency with the liquid epoxy resin, and preferred are aliphatic or alicyclic polybasic acid anhydrides having no aromatic ring in the molecule, such as hexahydrophthalic anhydride, tetrahydrophthalic anhydride, methyltetrahydrophthalic anhydride, endomethylenetetrahydrophthalic anhydride, polyazelaic anhydride and the like in view of low index of refraction and high Tg. Unsaturated aliphatic or aromatic polybasic acid anhydrides such as maleic anhydride, phthalic anhydride, trimellitic anhydride, pyromellitic anhydride and the like may also be used in admixture with the above anhydride in an appropriate proportion.

As the curing accelerator used in this invention, there are preferred imidazoles such as 2-ethyl-4-methylimidazole, 2-methylimidazole, 1-benzyl-2-methylimidazole and the like; tertiary amines such as 1,8-diazabicycloundecane and the like; 1,8-diazabicyclo[5,4,0]undecene-7-2-ethylhexylcarboxylic acid salt; etc.

As the anti-discoloring agent, there may be used hindered phenols such as 2-6-di-tertiary butyl-p-cresol, 2-allyl-6-propyl-p-cresol, and the like; organic sulfides; organic phosphites; higher fatty acid salts; and the like alone or in combination.

In order to keep the stability against discoloration at high temperatures, the use of them in combination is remarkably effective in some cases.

The cast-cured products of these compositions are used as transparent substrates, and a recording layer is formed on the above substrate by vapor deposition of a low melting point such as Te, Se, Bi and the like or a complex of the metal with an organic material.

The optical recording medium of this invention has unexpectedly superior thermal resistance, low index of refraction and high Tg, and since the substrate is obtained by casting, the optical recording medium is optically free from molding stress and has an excellent quality.

A further excellent optical recording medium can be obtained by modifying the surface of the above transparent substrate for the optical recording medium of this invention. That is, the surface hardness of the transparent substrate consisting of the cast-cured product of the epoxy resin composition comprising an alicyclic epoxy resin or a mixture of an aromatic epoxy resin and an alicyclic epoxy resin is substantially the same as that of PMMA, and hence, the surface tends to have a flaw, and therefore, if at least the side of the substrate which is exposed to a laser irradiation is subjected to a surface-hardening treatment, an optical recording medium excellent in handling is obtained.

The substrate which has been subjected to the surface-hardening treatment on one or both sides can be prevented from encountering a trouble such as flawing even in the step of forming a functional film, and enables intimate adhesion to a low melting point metal such as Te, Se, Bi or the like to be used as an information-recording layer.

The surface-hardening treatment can be carried out as follows:

a) A $SiO_2$ or SiO film is formed by a spattering method on the transparent substrate formed by cast-curing an epoxy resin composition comprising an alicyclic epoxy resin or a mixture of an aromatic epoxy resin and an alicyclic epoxy resin.

(b) A film of a radiation-curable resin or a thermosetting resin having a pencil hardness of 4H or more is formed by a spiner method, a dipping method or a roll-coater method on the transparent substrate formed by cast-curing an epoxy resin composition comprising an alicyclic epoxy resin or a mixture of an aromatic epoxy resin and an alicyclic epoxy resin.

(c) A film of a radiation-curable resin or a thermosetting resin is formed on the transparent substrate formed by cast-curing an epoxy resin composition comprising an alicyclic epoxy resin or a mixture of an aromatic epoxy resin and an alicyclic epoxy resin as in above (b), and then, a $SiO_2$ or SiO film is formed on the film of the resin.

The transparent substrate for optical recording medium treated by the above method is excellent in

3

resistance to abrasion or scratching and also excellent in intimate adhesion to a metal film which is an information-recording layer.

In this invention, any radiation-curable resin may be used as far as its cured coating film has a pencil hardness of 4H or more, and a ultraviolet ray-curable resin system consisting of a solution of an oligomer such as epoxy acrylate, urethane acrylate, polyester acrylate, polyether acrylate or the like in a polyfunctional acrylate monomer is preferably used. These ultraviolet ray-curable resins may be used in admixture of two or more, and the resulting mixtures have an effect of forming a coating free from unevenness in some cases.

Thermosetting resins which can form a highly hard resin coating such as silicone resin, melamine resin and the like may also be used appropriately.

Moreover, a method may be appropriately used which comprises diluting the above resin with a solvent, applying the resulting solution to the transparent substrate and curing the coating film in order to form a cured thin coating film on the transparent substrate.

It is preferable to use a photoinitiator having a good sensitivity in a relatively long wavelength region such as 4'-isopropyl-2-hydroxy-2-methylpropylophenone, 2,2-dimethoxy-2-phenylacetophenone, benzoin isobutyl ether, 1-hydroxyhexyl phenyl ketone or the like alone or in combination of two or more.

For the purpose of imparting a toughness, a polythiol compound may be added to the resin for the cured coating film in a proportion of 2 to 10 parts by weight, preferably about 5 parts by weight, per 100 parts by weight of the resin. When the proportion exceeds 10 parts by weight, the thermal resistance, hardness, glass transition temperature and the like are adversely affected. Moreover, a stabilizer, an anti-discoloring agent and the like may be added, if necessary, to the resin for the cured coating film.

The radiation-curable resin or thermosetting resin for the surface-cured coating is applied to the substrate by a conventional method such as spinner method, dipping method, roll-coater method or the like, and then subjected, as it is, or after removal of solvent, to irradiation with a radiation or heating to cure the coating film.

The thickness of the cured coating layer is preferably 5 to 15 μm, and if the thickness is less than 5 μm there is a possibility of insufficient curing due to the oxygen-prohibiting effect. If the thickness is more than 15 μm there is a fear of double refraction of a laser from an optical point of view.

The index of refraction of said cured coating layer is preferably as close as possible to that of the epoxy resin composition comprising the alicyclic epoxy resin or a mixture of the aromatic epoxy resin and the alicyclic epoxy resin.

By applying the surface-hardening treatment to at least one side of the transparent substrate, an optical recording medium having a surface hardness of 4H or more in terms of pencil hardness can be obtained.

In the case where the surface-hardening treatment is conducted with $SiO_2$, SiO or the like, the treatment is usually by a spattering method. The thickness of the resulting oxide layer is preferably in the range of from 10 to 500 nm (100 Å to 5,000 Å). By forming the $SiO_2$ or SiO film, advantages can be obtained in respect of not only thermal resistance and resistance to abrasion or scratching but also resistance to steam-permeation, and the thickness of the $SiO_2$ or SiO film should not be too great because the oxide layer is cracked through a thicker $SiO_2$ or SiO film is preferred.

The steam-permeability of this film is 0.01 $g/cm^2$ or less, and therefore, the deterioration of the information-recording layer due to steam can be prevented.

An information-recording layer is formed on the transparent substrate consisting of a cast-cured product of an epoxy resin composition comprising the alicyclic epoxy resin or a mixture of the aromatic epoxy resin or the alicyclic epoxy resin directly or after applying the surface treatment to the substrate, by applying a low melting point metal such as Te, Se, Bi or the like or a complex of the metal with an organic material by a conventional manner such as a spattering method or a vapor-deposition method. As a result thereof, a recording medium having excellent optical properties which have never been found is obtained.

The casting of the epoxy resin composition comprising the alicyclic epoxy resin or a mixture of the aromatic epoxy resin and the alicyclic epoxy resin can be carried out by placing a nickel stamper reinforced with backing and having a guide groove on one side, forming a mold having the desired thickness between the said nickel stamper and a flat nickel stamper reinforced with backing, placing the liquid epoxy resin composition in the resulting mold, defoaming the composition, heat-curing the composition and then releasing the cured product from the mold, thereby obtaining a substrate for an optical recording medium.

This invention is also concerned with a casting method using a casting mold which can produce a cast article having an excellent releasability and an excellent mirror surface in the casting of an epoxy resin composition.

When a cast product is taken out of the mold in the casting of an epoxy resin composition, the epoxy resin is inferior in mold-releasability because of its high adhesion. In this case, it is common to apply a releasing agent to the surface of the mold, which, however, results in a haze on the surface of the cast product, and therefore, a satisfactory mirror surface cannot be obtained in many cases.

In general, when molding an optical part consisting of an epoxy resin, a mold made of glass which has an excellent mirror surface is used, and the mirror surface of the mold is transferred to the molded article. However, in the case of a combination of, for example, an epoxy resin molded article and a glass mold, the cured molded article of the epoxy resin cannot easily be taken out of the mold because of strong adhesion

4

between the two. Moreover, in many cases, cracks are caused in the glass mold owing to stress caused by shrinkage of the epoxy resin.

In order to facilitate the release between the mold and the epoxy resin molded article, a releasing agent is in some cases applied to the surface of the mold as mentioned above. In this case, however, the releasing agent is transferred to the molded article to form a haze on the surface of the molded article, and therefore, the molded article thus obtained is by no means satisfactory as an optical part.

The present invention can overcome this problem. In the present invention, a cast-cured product having an excellent mirror surface and being free from haze can be obtained by forming on the surface of a casting mold a releasing film which facilitates the release between the cast mold and the cast-cured product of an epoxy resin composition comprising the alicyclic epoxy resin or a mixture of the aromatic epoxy resin and the alicyclic epoxy resin and also can transfer the mirror surface possessed by the mold.

In the present invention, a thin film of $MgF_2$ or $CaF_2$ is formed by a high frequency spattering method, an ion-plating method or vacuum-deposition method on the surface of a casting mold which is in contact with the epoxy resin composition, or alternatively, a thin film of SiC is formed on the surface of the casting mold by a reactive vacuum-deposition method or a spattering method, and this thin film is used as a releasing film in the casting mold for epoxy resin composition. The film thus obtained is excellent in resin-releasability and intimate adhesion to a casting mold made of a metal, glass, ceramics or the like. The materials used for forming the releasing film is chemically stable and excellent as a releasing film for casting an epoxy resin composition which is heat-cured in the mold. Among the materials, $MgF_2$ and $CaF_2$ are excellent in releasability, and SiC is excellent in thermal resistance.

In the case of $MgF_2$ and $CaF_2$, the degrees of intimate adhesion of films obtained by spattering method, ion-plating method and vacuum deposition method are as follows: Ion-plating method > Spattering method > Vacuum deposition method.

When the epoxy resin composition comprising the alicyclic epoxy resin or a mixture of the aromatic epoxy resin and the alicyclic epoxy resin is cast in the casting mold having a releasing film of this invention, the adhesion between the epoxy resin composition and the releasing film formed on the casting mold is much smaller than the adhesion between the releasing film and the casting mold, and therefore, the releasing film can act as a releasing agent when molding the epoxy resin composition.

The thickness of the thin film may be varied depending upon the kind of material of the cast product and the use of the cast product, and a thickness of 50 to 300 nm (500 to 3,000Å) is generally appropriate. If the thickness is less than 50 nm (500 Å), the number of repetitions of use of the releasing film becomes small, and if the thickness is more than 300 nm (3,000 Å), the accuracy of thickness distribution becomes bad.

In addition, the releasing film is appropriate for releasing a molded article having a ratio of diameter to thickness of 100 or more which is particularly low in releasability.

In the case of the cast product of the epoxy resin composition which strongly requires the mirror surface as in the optical recording medium substrate among optical parts, the releasing film is particularly effective because the mirror surface of the casting mold is transferred, without being impaired, to the molded product.

Furthermore, as a method for forming a hard cast film of a radiation-curable resin or a thermosetting resin on the transparent substrate consisting of the cast-cured product of the epoxy resin composition comprising the alicyclic epoxy resin or a mixture of the aromatic epoxy resin and the alicyclic epoxy resin, an organic polybasic acid anhydride, a curing accelerator and an anti-discoloring agent, the following cast-laminating method is excellent and very effective:

A radiation-curable resin or thermosetting resin which can form a cured film having a hardness of 4H or more is previously coated on the inner surface of the casting mold, and cured, and the epoxy resin composition is cast in the casting mold and heat-cured, whereby said hard coat is transferred to the transparent substrate consisting of the thus formed cast-cured product of the epoxy resin.

In the conventional method of forming a hard coat on a substrate composed of a conventional synthetic resin, it follows that a hard-coating step is added as one independent step, and in addition, it is very difficult to obtain a uniform hard coat layer. The above method of this invention has solved this problem.

The radiation-curable resin for forming a hard coat layer on the inner surface of the casting mold in this invention may be any ultraviolet ray-curable resin as far as it can form a film having a pencil hardness of 4H or more, and includes oligomers such as epoxy acrylate, urethane acrylate, polyester acrylate and polyether acrylate, which are in solution in a polyfunctional acrylate monomer. When these ultraviolet ray-curable resins are used in admixture of two or more, a coat free from unevenness can be obtained in some cases.

Thermosetting resins which can form a high hardness resin coating film such as silicone resin, melamine resin, polyimide resin or the like may be used appropriately.

A method may also be properly used which comprises diluting the above resin with a solvent, applying the resulting solution on the inner surface of the casting mold and then curing the resin to form a cured coating film on the inner surface of the mold.

The bonding strength between the cured product of the resin and the casting mold is generally weak, but it can be adjusted appropriately by selecting the kind of the resin for the cured coating film.

It is preferable to use a photoinitiator having a good sensitivity in a relatively long wavelength region such as 4'-isopropyl-2-hydroxy-2-methylpropylphenone, 2,2-dimethoxy-2-phenylacetophenone, benzoin isobutyl ether, 1-hydroxyhexyl phenyl ketone or the like alone or in combination of two or more.

For the purpose of imparting a toughness, a polythiol compound may be added to the resin for the cured coating film in a proportion of 2 to 10 parts by weight, preferably about 5 parts by weight, per 100 parts by weight of the resin. When the proportion exceeeds 10 parts by weight, the thermal resistance, hardness, glass transition temperature and the like are adversely affected. Moreover, a stabilizer, an anti-discoloring agent and the like may be added, if necessary, to the resin for the cured coating film.

The radiation-curable resin or thermosetting resin for the surface cured coating is applied to the substrate by a conventional method such as spinner method, dipping method, roll-coater method or the like, and then subjected, as it is, or after removal of solvent, to irradiation with a radiation or heating to cure the coating film.

The thickness of the cured coating layer is preferably 5 to 15 µm, and if the thickness is less than 5 µm there is a possibility of insufficient curing due to the oxygen-prohibiting effect. It the thickness is more than 15 µm there is a fear of double refraction of a laser from an optical point of view.

The index of refraction of said cured coating layer is preferably as close as possible to that of the epoxy resin composition comprising the alicyclic epoxy resin or a mixture of the aromatic epoxy resin and the alicyclic epoxy resin.

According to the above method, a substrate for an optical recording medium having transferred thereto a cured coating film having a pencil hardness of 4H or more can be produced by subjecting at least one side of a casting mold to a surface-hardening treatment, and cast-curing the said epoxy resin composition in the resulting coated mold.

When obtaining a transparent substrate according to the method of this invention, only one surface of the casting mold may be subjected to the coating film-treatment of this invention, whereby the surface-hardened coating film can be transferred to only one side of the transparent substrate. If the two facing surfaces of the casting mold are subjected to coating treatment, both surfaces of the resulting transparent substrate come to have the surface-hardened coating films transferred from the surfaces of the casting mold, and hence, it is very easy to impart a surface-hardened coating film to both surfaces of the transparent substrate. Moreover, when transferring a surface-hardened coating film to both surfaces of the transparent substrate, the same kind of resin or different kinds of resins may be used for the two surfaces. That is, a radiation-curable resin may be used for one surface and a thermosetting resin may be used for the other surfaces. Even in this case, no change is required for the cast-laminating step, and the desired substrate can be produced in the same manner. That is advantageous.

In the cast-laminating step, the selection of resins for the surface-hardened coating film to be transferred makes it unnecessary to treat the surface of the casting mold with a releasing film in some cases.

### Example 1

An epoxy resin composition consisting of an epoxy resin, an organic polybasic acid anhydride, a curing accelerator and an anti-discoloring agent was prepared with the following recipe:

Recipe

| | |
|---|---|
| Alicyclic epoxy resin[3,4-epoxycyclohexylmethyl 3,4-epoxycyclo-hexanecarboxylate] | 100 parts by wt. |
| Methylhexahydrophthalic anhydride | 125 parts by wt. |
| 1,8-Diazabicyclo[5,4,0]undecene-7-2-ethylhexylcarboxylic acid salt | 4.0 parts by wt. |
| 2,6-Di-tertiary butyl-p-cresol | 1.0 part by wt. |

The resulting epoxy resin composition was poured into a casting mold having a diameter of 305 mm and a thickness of 1.2 mm and composed of a glass plate and a nickel stamper reinforced with a backing and having a guide groove on one side and a releasing film of $MgF_2$ on the same side, and heat-cured at 120°C for 2 hours.

The molded article was then taken out of the mold to obtain a cast-cured transparent substrate of the epoxy resin composition having a guide groove.

A metallic tellurium-carbon system film was formed by vapor deposition on the substrate surface having a guide groove in a conventional manner to obtain an optical recording medium having a functional film.

Since the molding was according to a casting method, the double refraction due to molding stress was small, the index of refraction of the substrate was 1.535, and the retardation in the substrate having a diameter of 305 mm was 0.1 to 7 nm (double path).

On the above substrate was formed a metallic tellurium-carbon system film having a thickness of 30 nm (300 Å) while introducing a carbon disulfide gas in the vacuum vessel of a vacuum-deposition apparatus and generating a plasma, to obtain an optical recording medium.

The characteristics of the optical recording medium as shown in Table 1.

## Example 2

An epoxy resin composition consisting of an epoxy resin, an organic polybasic acid anhydride, a curing accelerator and an anti-discoloring agent with the following recipe was prepared:

### Recipe

| | |
|---|---|
| Alicyclic epoxy resin[3,4-epoxy-6-methylcyclohexylmethyl 3,4-epoxy-6-methyl-cycloexylcarboxylate] | 100 parts by wt. |
| Methylhexahydrophthalic anhydride | 103 parts by wt. |
| 1,8-Diazabicyclo[5,4,0]undecene-7-2-ethylhexylcarboxylic acid salt | 4.0 parts by wt. |
| 2,6-Di-tertiary butyl-p-cresol | 1.0 part by wt. |

The resulting composition was poured into a casting mold having a diameter of 305 mm and a thickness of 1.2 mm composed of a glass plate and a nickel stamper reinforced with a backing and having a guide groove on one side and a releasing film of $MgF_2$ on the same side, and heat-cured at 120°C for 2 hours.

The molded article was then taken out of the mold to obtain a cast-cured transparent substrate of the epoxy resin composition having a guide groove.

A metallic tellurium-carbon system film was formed by vapor-deposition on the substrate surface having the guide groove in the same manner as in Example 1 to obtain an optical recording medium having a functional film.

Since the molding was according to a casting method, the double refraction due to molding stress was small, the retardation in the substrate having a diameter of 305 mm was 0.1 to 5 nm (double path).

The characteristics of the optical recording medium are shown in Table 1.

## Example 3

An epoxy resin composition consisting of an epoxy resin, an organic polybasic acid anhydride, a curing accelerator and an anti-discoloring agent was prepared with the following recipe.

### Recipe A

| | |
|---|---|
| Bisphenol A type epoxy resin | 100 parts by wt. |
| Methylhexahydrophthalic anhydride | 88 parts by wt. |
| 2-Ethyl-4-methylimidazole | 0.5 parts by wt. |
| 2,6-Di-tertiary butyl-p-cresol | 1.0 part by wt. |

### Recipe B

| | |
|---|---|
| Alicyclic epoxy resin[3,4-epoxycyclohexylmethyl 3,4-epoxy-cyclohexanecarboxylate] | 100 parts by wt. |
| Methylhexahydrophthalic anhydride | 122 parts by wt. |
| 2-Ethyl-4-methylimidazole | 2.0 parts by wt. |
| 2,6-Di-tertiary butyl-p-cresol | 1.0 part by wt. |

The above compositions having the recipes A and B were mixed at a A and B weight ratio of 1:1 to obtain an epoxy resin composition.

In the same manner as in Examples 1 and 2, a transparent substrate was obtained from the epoxy resin composition by casting. The light transmission of the substrate was 830 nm was 92% and the index of refraction thereof was 1.510.

In the same manner as in Example 1, an information-recording layer was formed on the substrate in the same manner as in Example 1, to obtain an optical recording medium.

The characterstics of the optical recording medium thus obtained are shown in Table 1.

Comparative Example 1

Using PMMA (DELPET #560F manufactured by Asahi Kasei Kogyo Kabushiki Kaisha), a transparent substrate consisting of an injection-molded article having a diameter of 305 mm and a thickness of 1.2 mm and having also a guide groove on one side was obtained by an injection molding machine at a cylinder temperature of 260°C, a mold temperature of 60°C, at an injection pressure of 9.81 MPa (100 kg/cm²) for an injection period of 1.0 s.

In the same manner as in Example 1, a metallic tellurium-carbon system film was formed on the substrate to obtain an optical recording medium.

The characteristics of the optical recording medium are shown in Table 1.

Comparative Example 2

Using PC (IUPILON H—3000, manufactured by Mitsubishi Gas Chemical Co., Ltd.), a transparent substrate consisting of an injection-molded article having a diameter of 305 mm and a thickness of 1.2 mm and a guide groove on one side was prepared at an injection cylinder temperature of 300°C, a mold temperature of 70°C, at an injection pressure of 9.81 MPa (100 kg/cm²) for an injection period of 1.2 s.

In the same manner as in Example 1, a metallic tellurium-carbon system film was formed on the substrate to obtain an optical recording medium.

The characteristics of the optical recording medium are shown in Table 1.

Table 1 Characteristics of optical recording medium

| Items / Sample | Substrate | | | Optical recording medium | | |
|---|---|---|---|---|---|---|
| | Retardation (nm) at 830 nm (Double path) | Saturated moisture absorption 30°C, 80% RH x 250 h (%) | Glass transition temp. (°C) | C/N ratio | | Readable diameter (mm) |
| | | | | Normal state | Heat treatment 100°C 1 h | |
| Example 1 | 0.1 - 5.0 | 0.65 | 150 | 56 | 56 | 60 - 300 |
| Example 2 | 0.1 - 5.0 | 0.61 | 148 | 54 | 54 | 60 - 300 |
| Example 3 | 0.1 - 5.0 | 0.54 | 149 | 55 | 55 | 60 - 300 |
| Comp. Ex. 1 | 5 - 20 | 2.2 | 105 | 55 | Un-measurable | 60 - 300 |
| Comp. Ex. 2 | 80 - 250 | 1.5 | 148 | 45 | 45 | 60 - 190 |

EP 0 144 705 B1

## Example 4

On both surfaces of the cast-cured product of the epoxy resin composition of Example 1, 2 or 3, a $SiO_2$ film was formed in a thickness of 100 nm (1,000 Å) by a high frequency spattering method.

Subsequently, a metallic tellurium-carbon system film having a thickness of 400 nm (4,000 Å) was formed on one surface of the resulting transparent substrate by a spattering method.

Two sheets of the optical recording medium thus obtained were put on one another so that the functional films faced each other, and the peripheral portion thereof was fixed with an adhesive, to obtain a laminate type optical recording medium having a sandwich structure.

The surface of the optical recording medium thus obtained had a pencil hardness of 4H because of the excellent performance of the $SiO_2$ film.

On the other hand, the surface of a laminate type optical recording medium prepared in the same manner as in Example 3, except that the $SiO_2$ film was not used, had a pencil hardness of H which is rather low, tended to be sensitive to scratching or abrasion, and therefore, a sufficient care was required in handling.

## Example 5

The same procedure as in Example 4 was repeated, except that SiO was substituted for the $SiO_2$ to obtain an optical recording medium. The surface of the optical recording medium had a pencil hardness of 4H and was excellent in resistance to abrasion or scratching.

## Example 6

A casting mold having a diameter of 305 mm and a thickness of 1.2 mm was prepared using two sheets of glass plate which had been subjected to releasing treatment, and the epoxy resin composition of Example 1, 2 or 3 was poured into the mold and cured to obtain a cured product having a flat surface.

The cured product was coated with a radiation-curable resin having the following recipe uniformly by aa dipping method:

Recipe

| | |
|---|---|
| Dipentaerythritol hexaacrylate | 100 parts by wt. |
| 4'-Isopropyl-2-hydroxy-2-methyl propiophenone | 4 parts by wt. |
| Isopropyl alcohol | 400 parts by wt. |
| Toluene | 100 parts by wt. |
| A leveling agent | 0.4 part by wt. |

The coated surface was dried at 70°C for 10 min and then irradiated with ultraviolet rays from a high pressure mercury lamp to form a coating having a thickness of 5 μm.

The surface of the transparent substrate thus obtained had a pencil hardness of 6H or more and was excellent in resistance to abrasion or scratching. That is, even after the surface was rubbed 100 times with steel wool, no scratches were found on the surface of the substrate.

In the same manner as in Example 1, a metallic tellurium-carbon system film was formed in a thickness of 30 nm (300 Å) on the above substrate to obtain an optical recording medium.

The surface of the medium having no information-recording layer was excellent in resistance to abrasion or scratching.

## Example 7

Both surfaces of the transparent substrate consisting of the cast-cured product of the epoxy resin composition obtained in Example 6 were uniformly coated with a melamine resin solution comprising hexamethylolmelamine as the main component by means of a roll-coater, and the coated surfaces were dried and then cured at 140°C for 2 hours, to form a cured coating film having a thickness of 10 μm on both surfaces.

The surface of the transparent substrate thus obtained had a pencil hardness of 5H or more, and even after the surface was rubbed 100 times with steel wool no scratches were found at all.

In the same manner as in Example 1, a metallic tellurium-carbon system film was formed in a thickness of 30 nm (300 Å) on the transparent substrate to prepare an optical recording medium.

The surface opposite to the information-recording layer of the optical recording medium thus obtained had a pencil hardness of 4H, and was excellent in thermal resistance and resistance to abrasion or scratching.

The adhesion between the substrate and a metallic tellurium-carbon system film required for preparing an optical recording medium was very good.

## Example 8

To both surfaces of the substrate having formed thereon a cured coating film obtained in Example 6 was applied $SiO_2$ by a high frequency spattering method to form a film having a thickness of 50 nm (500 Å).

Subsequently, a metallic tellurium-carbon system film having a thickness of 400 nm (4,000 Å) was formed thereon in the same manner as in Example 1 to obtain an optical recording medium.

The surface opposite to the information-recording layer of the optical recording medium thus obtained had a pencil hardness of 4H and was excellent in thermal resistance and resistance to abrasion or scratching.

## Example 9

A $MgF_2$ film was formed on a glass plate having a mirror surface by an ion-plating method. The ion-plating conditions were as follows:

The degree of vacuum at the initial stage of an ion-plating apparatus was adjusted to $1,33 \times 10^{-3}$ Pa ($1 \times 10^{-5}$ Torr), and a nickel layer having a thickness of 20 nm (200 Å) was first formed as an anchor by an ion-plating method, and subsequently, nickel and $MgF_2$ were simultaneously applied in a thickness of 40 nm (400 Å) by an ion-plating method to form a film made of nickel and $MgF_2$.

On the film, a film of $MgF_2$ was further formed in a thickness of 200 nm (2,000 Å).

Using two sheets of glass plate having formed thereon a mold-releasing film, a casting mold having a diameter of 305 mm and a thickness of 1.2 mm was prepared, and the epoxy resin composition of Example 1, 2 or 3 was poured into the mold and heat-cured at 100°C for 3 hours.

The cured product was easily released from the mold without flawing the glass, and the surface of the molded product contacting the $MgF_2$ has transferred thereon the mirror surface of the glass and was quite free from haze or other faults.

The mold-releasing $MgF_2$ film had a strong adhesion to the glass and had a good releasing effect even after at least 10 repetitions of use.

Since the molding was by casting, the double refraction due to molding stress was small, and the retardation in the substrate having a diameter of 305 mm was 0.1 to 5 nm (double path).

In the same manner as in Example 1, a metallic tellurium-carbon system film was formed on the above substrate to prepare an optical recording medium.

## Example 10

A $MgF_2$ film having a thickness of 20 nm (2000 Å) was formed by a high frequency spattering method on each of nickel stamper reinforced with backing having a guide groove and flat plate nickel stamper reinforced with backing. The spattering conditions were as follows:

The degree of vacuum at the initial stage of the vacuum vessel of a spattering apparatus was adjusted to $1,33 \times 10^{-3}$ Pa ($1 \times 10^{-5}$ Torr), and the temperature of the nickel stampers was adjusted to 95°C, after which the stampers were allowed to stand at said temperature for 30 minutes. Thereafter, the temperature of the nickel stampers was adjusted to 80°C, and Ar was thereafter introduced into the spattering apparatus until the pressure reached $2,67 \times 10^{-3}$ Pa ($2 \times 10^{-5}$ Torr), after which $MgF_2$ was spattered at a film-forming rate of 50 nm/min (500 Å/min) for 4 minutes by a high frequency spattering method to form a film having a thickness of 200 nm (2,000 Å).

Using the thus obtained nickel stampers reinforced with backing, a casting mold having a diameter of 305 mm and a thickness of 1.2 mm was prepared, and the epoxy resin composition of Example 1, 2 or 3 was poured into the mold and heat-cured at 100°C for 3 hours.

The cast-cured product was easily released from the mold, thereby obtaining a transparent substrate having a guide groove, from which an optical recording medium was prepared in the same manner as in Example 1.

The guide groove-transferability was observed by means of an electron microphotograph to find that the transferability was very good.

The mold was found to have still a good mold-releasability even after more than 10 repetitions of use.

## Comparative Example 3

A casting mold having a diameter of 305 mm and a thickness of 1.2 mm was prepared using a stearic acid-coated glass plate, and the epoxy resin composition of Example 1, 2 or 3 was cast into the mold. It was found that haze was transferred, and when the mold was used twice for casting, it had no mold-releasability and the mold-release was difficult.

## Comparative Example 4

Using a glass plate free from the $MgF_2$ film stated in Example 9, a casting mold having a diameter of 305 mm and a thickness of 1.2 mm was prepared, and the epoxy resin composition of Example 1, 2 or 3 was cast into the mold and cured.

The mold-release of the cured product was difficult, and when the cured product was forced to be released from the mold, the latter was broken.

## Example 11

A CaF$_2$ film was formed on a glass plate having a mirror surface by a high frequency spattering method. The high frequency spattering conditions were as follows:

The degree of vacuum at the initial stage of the vacuum vessel of a spattering apparatus was adjusted to 1,33 × 10$^{-3}$ Pa (1 × 10$^{-5}$ Torr) and the glass plate was heated to 350°C, after which CH$_4$ was introduced into the vacuum vessel until its partial pressure reached 5,33 × 10$^{-3}$ Pa (4 × 10$^{-4}$ Torr). Ar was further introduced into the vacuum vessel until the pressure reached 267 × 10$^{-3}$ Pa (2 × 10$^{-3}$ Torr), and CaF$_2$ was spattered at a film-forming rate of 25 nm/min (250 Å/min) for 8 minutes by a high frequency spattering method to form a film having a thickness of 200 nm (2,000 Å).

Using the glass plate having formed thereon a CaF$_2$ film, a casting mold having a diameter of 305 mm and a thickness of 1.2 mm was prepared, and the epoxy resin composition of Example 1, 2 or 3 was cast into the mold and cured.

The cured product was easily released from the mold without breaking the glass, and the mirror surface of the glass was exactly transferred to the surface contacting CaF$_2$ and no fault such as haze or the like was found.

Moreover, the CaF$_2$ film had a strong adhesion to glass, and even when the mold was repeatedly used more than 5 times it had a good mold-releasability.

## Example 12

A SiC film was formed on a glass plate having a mirror surface by a high frequency spattering method. The high frequency spattering conditions were as follows:

The degree of vacuum at the initial stage of the vacuum vessel of a spattering apparatus was adjusted to 1,33 × 10$^{-3}$ Pa (1 × 10$^{-5}$ Torr) and the glass plate was heated to 350°C, after which CH$_4$ was introduced to a partial pressure of 53,3 × 10$^{-3}$ (4 × 10$^{-4}$ Torr). Moreover, Ar was introduced until the pressure reached 267 × 10$^{-3}$ Pa (2 × 10$^{-3}$ Torr), after which SiC was spattered at a film-forming rate of 25 nm/min (250 Å/min) for 8 minutes by a high frequency spattering method to form a film having a thickness of 200 nm (2,000 Å).

Using the glass plate having thus formed thereon a SiC film, a casting mold having a diameter of 305 mm and a thickness of 1.2 mm was prepared, and the epoxy resin composition of Example 1, 2 or 3 was cast into the mold and cured by heating.

The cast-cured product was easily released from the mold without breaking the glass, the mirror surface of glass was exactly transferred to the surface contacting SiC, and no fault such as haze or the like was found.

Moreover, the SiC releasing film had a strong adhesion to glass, and the mold had a good releasability even after at least 7 repetitions of use.

## Example 13

The degree of vacuum at the initial stage of a vacuum deposition apparatus was adjusted to 1,33 × 10$^{-3}$ Pa (1 × 10$^{-5}$ Torr) while keeping the temperature of a glass plate at 350°C, and CH$_4$ was then introduced to 133 × 10$^{-3}$ Pa (1 × 10$^{-3}$ Torr), after which a high frequency plasma was generated.

Silicon was vapor-deposited by heating by means of an electron gun, and a SiC film having a thickness of 180 nm (1,800 Å) was formed by a reactive vapor-deposition method. The vapor-depositing rate was 12 nm/min (120 Å/min).

Using two sheets of glass plate having thus formed thereon a SiC film, a casting mold having a diameter of 305 mm and a thickness of 1.2 mm was prepared, and the epoxy resin composition of Example 1, 2 or 3 was cast into the mold and heat-cured.

The cast-cured product was easily released from the mold without breaking the glass, the mirror surface of the glass was exactly transferred to the surface contacting the SiC film, and no fault such as haze or the like was found.

Moreover, the SiC releasing film had a strong adhesion to glass and the mold had a good releasability even after at least 7 repetitions of use.

## Example 14

A glass plate was coated with a radiation-curable resin having the following recipe uniformly by a dipping method:

Recipe

| | |
|---|---|
| Dipentaerythritol hexaacrylate | 100 parts by wt. |
| 4'-Isopropyl-2-hydroxy-2-methylpropiophenone | 4 parts by wt. |
| Isopropyl alcohol | 400 parts by wt. |
| Toluene | 100 parts by wt. |
| Leveling agent | 0.4 part by wt. |

The coated plate was then dried at 70°C for 10 minutes and irradiated with ultraviolet rays from a high pressure mercury lamp to form a coating film having a thickness of 5 µm on the glass plate. This coating film was intimately contacted with the glass surface and was easily removed by use of cellophane tape.

Two sheets of the glass plate having formed thereon the coating film were placed so that the coating films faced each other, and the three sides of the plates were sealed with a spacer to prepare a casting mold, and an epoxy resin composition having the following recipe was cast into the mold and cured at 100°C for 3 hours:

Recipe

| | |
|---|---|
| Alicyclic epoxy resin [3,4-epoxy-cyclohexylmethyl 3,4-epoxycyclohexanecarboxylate] | 100 parts by wt. |
| 1,5-Propanediol | 3 parts by wt. |
| Methylhexahydrophthalic anhydride | 122 parts by wt. |
| Stabilizer | 10 parts by wt. |
| 1,8-Diazabicyclo[5,4,0]undecene-7 2-ethylhexylcarboxylic acid salt | 6 parts by wt. |

The cured product was released from the mold, to obtain a laminated transparent substrate having transferred thereto a coating film of the radiation-curable resin. In the same manner as in Example 1, an information-recording layer was applied to the substrate to obtain an optical recording medium.

The pencil hardness of the surface of the transparent substrate was 6H or more, and the surface thereof was excellent in resistance to abrasion or scratching, and no scratches were found when the surface was rubbed 100 times with steel wool.

Example 15

In the same manner as in Example 14, a coating film of the radiation-curable resin was formed on a glass plate, and a $MgF_2$ releasing film was formed on another glass plate free from the coating film of a radiation-curable resin. Using the two glass plates, a casting mold was prepared in the same manner as in Example 14, and the epoxy resin composition of Example 2 was cast into the mold and cured to obtain a laminated transparent substrate having the coating film of a radiation-curable resin on one side.

The optical recording medium obtained from the substrate had the same characteristics as in Example 14.

Example 16

A glass plate was coated uniformly with a radiation-curable resin having the following recipe by a dipping method:

Recipe

| | |
|---|---|
| Dipentaerithrytol hexaacrylate | 50 parts by wt. |
| Tetramethylol methanetetraacrylate | 50 parts by wt. |
| 1-Hydroxyhexyl phenyl ketone | 4 parts by wt. |
| Isopropyl alcohol | 400 parts by wt. |
| Toluene | 100 parts by wt. |
| Leveling agent | 0.4 part by wt. |

The coating film was dried at 70°C for 10 minutes and then irradiated with ultraviolet rays from a high pressure mercury lamp to form a coating film having a thickness of 5 µm on the glass plate. This coating film was intimately contacted with the surface of glass but was easily removed by means of a cellophane tape.

Subsequently, two sheets of the glass plate having formed thereon the above coating film were placed so that the coating films faced each other and the three sides of the plate were sealed with a spacer to prepare a casting mold, and the epoxy resin composition of Example 3 was cast thereinto and cured to obtain a laminated transparent substrate having the coating film of radiation-curable resin transferred from the mold on both sides.

The optical recording medium obtained from the substrate had a pencil hardness of 9H, was excellent in resistance to abrasion or scratching and no scratches were found even after the surface was rubbed 100 times with steel wool.

Example 17

A radiation-curable resin having the same recipe as in Example 14 was applied to one side of a glass plate by means of a bar coater, dried and irradiated with ultraviolet rays from a high pressure mercury lamp to form a coating film having a thickness of 7 μm on the glass plate.

Separately, an aqueous melamine resin solution having a resin content of 40% by weight was applied to one side of another glass plate by means of a bar coater, dried at 90°C for 1 hour, and then heat-cured at 150°C for 1 hour to obtain a coating film having a thickness of 5 μm.

The two glass plates having formed thereon the coating film were placed so that the coating films faced each other, and three sides of the plates were sealed with a spacer to form a casting mold. The epoxy resin composition of Example 14 was cast into the mold and heat-cured at 100°C for 3 hours, and then released from the mold.

Consequently, the one side of the cured product of the epoxy resin composition had transferred thereto the radiation-curable resin layer and the other side had transferred thereto the melamine resin cured layer.

Both surfaces of the cured transparent substrate thus obtained had excellent resistance to abrasion or scratching, and no scratches were found even after the surfaces were rubbed 100 times with steel wool.

The optical recording medium obtained from the substrate was excellent in resistance to abrasion or scratching and had a high reliability.

**Claims**

1. An optical recording medium comprising a transparent substrate of a synthetic resin and an information-recording layer provided thereon, on which medium information can be optically written, read and erased by means of a laser light, characterized in that said transparent substrate consisting essentially of a cast-cured product of an epoxy resin composition comprising an alicyclic epoxy resin, an organic polybasic acid anhydride, a curing accelerator and an anti-discoloring agent.

2. An optical recording medium according to Claim 1, wherein a minor amount of the alicyclic epoxy resin is replaced by an aromatic epoxy resin.

3. An optical recording medium according to Claim 1 or 2, wherein the transparent substrate has a SiO or $SiO_2$ film bonded to one side or both sides thereof and the information-recording layer.

4. An optical recording medium according to Claim 1 or 2, wherein the transparent substrate has a cured coating film of a radiation-curable resin or a thermosetting resin bonded to one side or both sides thereof and the information-recording layer.

5. An optical recording medium according to Claim 1 or 2, wherein the transparent substrate has a cured coating fim of a radiation-curable resin or a thermosetting resin bonded to one side or both sides thereof and a SiO or $SiO_2$ film is further bonded to said coating film, and the information-recording layer is attached to the SiO or $SiO_2$ film.

6. An optical recording medium according to Claim 2, 3 or 4, wherein the cast-cured product has an index of refraction of 1.50 to 1.60.

7. An optical recording medium according to Claim 4 or 5, wherein the cured coating film has a pencil hardness of 4H or more.

8. An optical recording medium according to Claim 4 or 5, wherein the radiation-curable resin is an ultraviolet ray-curable resin.

9. An optical recording medium according to Claim 4 or 5, wherein the transparent substrate has a cured coating film of a radiation-curable resin on both sides thereof and the coating films are of the same kind of resin.

10. An optical recording medium according to Claim 4 or 5, wherein the transparent substrate has a cured coating film of a radiation-curable resin on both sides thereof and the coating films are of different kinds of resins.

11. An optical recording medium according to Claim 4 or 5, wherein the transparent substrate has a cured coating film of a thermosetting resin on one side or both sides thereof and the thermosetting resin is a melamine resin.

12. A process for producing an optical recording medium according to Claim 1, which comprises forming a film of $MgF_2$ or $CaF_2$ on the inner surface of a casting mold by an ion-plating method, a sputtering method or a vacuum-deposition method, casting into the mold an epoxy resin composition comprising an alicyclic epoxy resin or a mixture of a major amount of an alicyclic epoxy resin and a minor amount of an aromatic epoxy resin, an organic polybasic acid anhydride, a curing accelerator and an anti-discoloring agent, and then heat-curing the epoxy resin composition to obtain a transparent substrate, and applying an information-recording layer onto the substrate.

13. A process for producing an optical recording medium according to Claim 1, which comprises forming a film of SiC on the inner surface of a casting mold by a sputtering method or a reactive vacuum-deposition method, casting an epoxy resin composition comprising an alicyclic epoxy resin or a mixture of a major amount of an alicyclic epoxy resin and a minor amount of an aromatic epoxy resin, an organic polybasic acid anhydride, a curing accelerator and an anti-discoloring agent, curing the epoxy resin composition to obtain a transparent substrate, and applying an information-recording layer onto the substrate.

14. A process for producing an optical recording medium according to Claim 4, which comprises coating at least one inner surface of a casting mold with a radiation-curable resin or a thermosetting resin, curing the resin to form a coating film on the inner surface of the mold, casting into the mold an epoxy resin composition comprising an alicyclic epoxy resin or a mixture of a major amount of an alicyclic epoxy resin and a minor amount of an aromatic epoxy resin, an organic polybasic acid anhydride, a curing accelerator and an anti-discoloring agent, heat-curing the epoxy resin composition, thereby transferring the coating film to the resulting substrate, and applying an information-recording layer to the surface of the resulting two-layer or three-layer cast laminate.

15. A process according to Claim 14, wherein the casting mold has a releasing film bonded to the inner surface before coating it with the radiation-curable or thermosetting resin.

16. A process according to Claim 14, wherein the casting mold is free from a releasing film.

17. A process according to Claim 14, wherein two inner surfaces of the casting mold are coated with one kind of radiation-curable or thermosetting resin.

18. A process according to Claim 14, wherein two inner surfaces of the casting mold are coated with different kinds of radiation-curable or thermosetting resins.

**Patentansprüche**

1. Optisches Aufzeichnungsmaterial aus einem durchsichtigen Schichtträger aus einem Kunsthraz und einer darauf befindlichen Informationsaufzeichnungsschicht, auf dem eine Information mittels Laserlicht optisch aufgezeichnet, abgelesen und gelöscht werden kann, dadurch gekennzeichnet, daß der durchsichtige Schichtträger im wesentlichen aus einem gegossenen und gehärteten Produkt aus einer Epoxyharzmasse, umfassend ein alicyclisches Epoxyharz, ein organisches mehrbasisches Säureanhydrid, einen Härtungsbeschleuniger und ein Antiverfärbungsmittel besteht.

2. Optisches Aufzeichnungsmaterial nach Anspruch 1, dadurch gekennzeichnet, daß eine untergeordnete Menge des alicyclischen Epoxyharzes durch ein aromatisches Epoxyharz ersetzt ist.

3. Optisches Aufzeichnungsmaterial nach Anspruch 1 oder 2, dadurch gekennzeichnet, daß an eine oder beide Seite(n) des durchsichtigen Schichtträgers und die Informationsaufzeichnungsschicht ein SiO- oder $SiO_2$-Film gebunden ist.

4. Optisches Aufzeichnungsmaterial nach Anspruch 1 oder 2, dadurch gekennzeichnet, daß an eine oder beide Seite(n) des durchsichtigen Schichtträgers und die Informationsaufzeichnungsschicht ein gehärteter filmartiger Überzug aus einem durch Bestrahlung härtbaren Harz oder einem wärmehärtbaren Harz gebunden ist.

5. Optisches Aufzeichnungsmaterial nach Anspruch 1 oder 2, dadurch gekennzeichnet, daß an eine oder beide Seite(n) des durchsichtigen Schichtträgers ein gehärteter filmartiger Überzug aus einem durch Bestrahlung härtbaren Harz oder einem wärmehärtbaren Harz und zusätzlich an den filmartigen Überzug ein SiO- oder $SiO_2$-Film gebunden sind und daß die Informationsaufzeichnungsschicht an dem SiO- oder $SiO_2$-Film haftet.

6. Optisches Aufzeichnungsmaterial nach Anspruch 2, 3 oder 4, dadurch gekennzeichnet, daß das gegossene und gehärtete Produkt einen Brechungsindex von 1,50 bis 1,60 aufweist.

7. Optisches Aufzeichnungsmaterial nach Anspruch 4 oder 5, dadurch gekennzeichnet, daß der gehärtete filmartige Überzug eine Bleistifthärte von 4H odermehr aufweist.

8. Optisches Aufzeichnungsmaterial nach Anspruch 4 oder 5, dadurch gekennzeichnet, daß das durch Bestrahlunghärtbare Harz aus einem durch UV-Strahlung härtbaren Harz besteht.

9. Optisches Aufzeichnungsmaterial nach Anspruch 4 oder 5, dadurch gekennzeichnt, daß an eine oder beide Seite(n) des durchsichtigen Schichtträgers ein gehärteter filmartiger Überzug aus einem durch Bestrahlung härtbaren Harz gebunden ist und daß die filmartigen Überzüge aus derselben Art Harz bestehen.

10. Optisches Aufzeichnungsmaterial nach Anspruch 4 oder 5, dadurch gekennzeichnet, daß an eine oder beide Seite(n) des durchsichtigen Schichtträgers ein gehärteter filmartiger Überzug aus einem durch Bestrahlung härtbaren Harz gebunden ist und daß die filmartigen Überzüge aus unterschiedlichen Arten von Harzen bestehen.

11. Optisches Aufzeichnungsmaterial nach Anspruch 4 oder 5, dadurch gekennzeichnet, daß an eine oder beide Seite(n) des durchsichtigen Schichtträgers ein gehärteter filmartiger Überzug aus einem wärmehärtbaren Harz gebunden ist und daß das wärmehärtbare Harz aus einem Melaminharz besteht.

12. Verfahren zur Herstellung eines optischen Aufzeichnungsmaterials nach Anspruch 1, dadurch gekennzeichnet, daß man durch Ionenplattierung, Zerstäubung oder Vakuumablagerung auf der Innenwandfläche einer Gießform einen $MgF_2$- oder $CaF_2$-Film ausbildet, in die Form eine Epoxyharzmasse, umfassend ein alicyclisches Epoxyharz oder eine Mischung aus einer Hauptmenge eines alicyclischen Epoxyharzes und einer untergeordneten Menge eines aromatischen Epoxyharzes, ein organisches mehrbasisches Säureanhydrid, einen Härtungsbeschleuniger und ein Antiverfärbungsmittel, gießt,

EP 0 144 705 B1

danach die Epoxyharzmasse zur Bildung eines durchsichtigen Schichtträgers wärmehärtet und schließlich auf den Schichtträger eine Informationsaufzeichnungsschicht appliziert.

13. Verfahren zur Herstellung eines optischen Aufzeichnungsmaterials nach anspruch 1, dadurch gekennzeichnet, daß man durch Zerstäubung oder reaktive Vakuumablagerung auf der Innenwandfläche einer Gießform einen SiC-Film ausbildet, eine Epoxyharzmasse, umfassend ein alicyclisches Epoxyharz oder eine Mischung aus einer Hauptmenge eines alicyclischen Epoxyharzes und einer untergeordneten Menge eines aromatischen Epoxyharzes, ein organisches mehrbasisches Säureanhydrid, einen Härtungsbeschleuniger und ein Antiverfärbungsmittel, gießt, die epoxyharzmasse zur Bildung eines durchsichtigen Schichtträgers härtet und schließlich auf den Schichtträger eine Informationsaufzeichnungsschicht appliziert.

14. Verfahren zur Herstellung eines optischen Aufzeichungsmaterials nach Anspruch 4, dadurch gekennzeichnet, daß man zumindest eine Innenwandfläche einer Gießform mit einem durch Bestrahlung härtbaren Harz oder einem wärmehärtbaren Harz beschichtet, das Harz zur Ausbildung eines filmartigen Überzugs auf der Innenwandfläche der Form härtet, in die Form eine Epoxyharzmasse, umfassend ein alicyclisches Epoxyharz oder eine Mischung aus einer Hauptmenge eines alicyclischen Epoxyharzes und einer untergeordneten Menge eines aromatischen Epoxyharzes, ein organisches mehrbasisches Säureanhydrid, eine Härtungsbeschleuniger und ein Antiverfärbungsmittel, gießtt, die Epoxyharzmasse wärmehärtet und dabei den filmartigen Überzug auf den gebildeten Schichtträger überträgt und schließblich auf die Oberfläche des gebildeten zweilagigen oder dreilagigen Verbundgießlings eine Informationsaufzeichnungsschicht appliziert.

15. Verfahren nach Anspruch 14, dadurch gekennzeichnet, daß an die Innenwandfläche der Gießform vor dem Eingießen des durch Bestrahlung härtbaren oder wärmehärtbaren Harzes ein Trennfilm gebunden wird.

16. Verfahren nach Anspruch 14, dadurch gekennzeichnet, daß die Gießform keinen Trennfilm enthält.

17. Verfahren nach Anspruch 14, dadurch gekennzeichnet, daß beide Innenwandflächen der Gießform mit einer Art eines durch Bestrahlung härtbaren oder wärmehärtbaren Harzes beschichtet werden.

18. Verfahren nach Anspruch 14, dadurch gekennzeichnet, daß beide Innenwandflächen der Gießform mit unterschiedlichen Arten von durch Bestrahlung härtbaren oder wärmehärtbaren Harzen beschichtet werden.

## Revendications

1. Matériau d'enregistrement optique, comprenant un substrat transparent dérivé d'une résine synthétique, et une couche d'enregistrement d'information déposée sur celui-ci, sur lequel on peut écrire, lire et effacer, par voie optique à l'aide d'une lumière laser, caractérisé en ce que le substrat transparent consiste essentiellement en un produit coulé et durci à base d'une composition de résine époxy comprenant une résine époxy alicyclique; un anhydride de polyacide organique, un accélérateur de durcissement et un agent anti-décolorant.

2. Matériau d'enregistrement optique selon la revendication 1, dans lequel une quantité mineure de la résine époxy alicyclique est remplacée par une résine époxy aromatique.

3. Matériau d'enregistrement optique selon la revendication 1 ou 2, dans lequel le substrat transparent comporte un film de SiO ou de $SiO_2$, lié à l'une ou chacune de ses faces, et à la couche d'enregistrement d'information.

4. Matériau d'enregistrement optique selon la revendication 1 ou 2, dans lequel le substrat transparent comporte un fillm de revêtement durci dérivé d'une résine durcissable par irradiation ou d'une résine thermodurcissable, lié à l'une ou chacune de ses faces, et à la couche d'enregistrement d'information.

5. Matériau d'enregistrement optique selon la revendication 1 ou 2, dans lequel le substrat transparent comporte un film de revêtement durci dérivé d'une résine durcissable par irradiation ou une résine thermodurcissable, lié sur l'une ou chacune de ses faces, et un film de SiO ou de $SiO_2$ est en outre lié à ce film de revêtement, la couche d'enregistrement d'information étant liée au film de SiO ou de $SiO_2$.

6. Matériau d'enregistrement optique selon la revendication 2, 3 ou 4, dans lequel le produit coulé et durci a un indice de réfraction de 1,50 à 1,60.

7. Matériau d'enregistrement optique selon la revendication 4 ou 5, dans lequel le film de revêtement durci a une dureté au crayon de 4H ou plus.

8. Matériau d'enregistrement optique selon la revendication 4 ou 5, dans lequel la résine durcissable par irradiation est une résine durcissable sous un rayonnement ultraviolet.

9. Matériau d'enregistrement optique selon la revendication 4 ou 5, dans lequel le substrat transparent comporte un film de revêtement durci dérivé d'une résine durcissable par irradiation sur ses deux faces, et dans lequel les films de revêtement sont en résine du même type.

10. Matériau d'enregistrement optique selon la revendication 4 ou 5, dans lequel le substrat transparent comporte un film de revêtement durci dérivé d'une résine durcissable par irradiation sur ses deux faces, et dans lequel les films de revêtement sont en résines de types différents.

11. Matériau d'enregistrement optique selon la revendication 4 ou 5, dans lequel le substrat transparent, comporte un film de revêtement durci dérivé d'une résine thermodurcissable sur l'une ou chacune de ses faces, et dans lequel la résine thermodurcissable est une résine de mélamine.

16

12. Procédé de fabrication d'un matériau d'enregistrement optique selon la revendication 1, dans lequel on forme un film de MgF$_2$ ou de CaF$_2$ sur la surface intérieure d'un moule de coulage, en mettant en oeuvre un procédé de plaquage ionique, d'atomisation ou de dépôt sous vide, on coule dans le moule une composition de résine époxy, comprenant une résine époxy alicyclique, ou un mélange d'une majeure proportion d'une résine époxy alicyclique et d'une quantité mineure d'une résine époxy aromatique, un anhydride de polyacide organique, un accélérateur de durcissement et un agent anti-décolorant, et on durcit ensuite à chaud la composition de résine époxy, pour obtenir un substrat transparent, et on applique une couche d'enregistrement d'information sur le substrat.

13. Procédé de fabrication d'un matériau d'enregistrement optique selon la revendication 1, dans lequel on forme un film de SiC sur la surface intérieure d'un moule de coulage, en mettant en oeuvre un procédé d'atomisation ou un procédé de dépôt réactif sous vide, on coule une composition de résine époxy comprenant une résine époxy alicyclique, ou un mélange d'une majeure proportion d'une résine époxy alicyclique et d'une proportion mineure d'une résine époxy aromatique, un anhydride de polyacide organique, un accélérateur de durcissement et un agent anti-décolorant, on durcit la composition de résine époxy pour obtenir un substrat transparent, et on applique une couche d'enregistrement d'information sur le substrat.

14. Procédé de fabrication d'une matériau d'enregistrement optique selon la revendication 4, dans lequel on revêt au moins une surface intérieure d'un moule de coulage avec une résine durcissable par irradiation ou une résine thermodurcissable, on durcit la résine pour former un film de revêtement sur la surface intérieure de moule, on coule à l'intérieur du moule une composition de résine époxy comprenant une résine époxy alicyclique, ou un mélange d'une majeure proportion d'une résine époxy alicyclique et d'une proportion mineure d'une résine époxy aromatique, un anhydride de polyacide organique, un accélérateur de durcissement et un agent anti-décolorant, on durcit à chaud la composition de résine époxy de façon à transférer le film de revêtement sur le substrat résultant, et on applique une couche d'enregistrement d'information sur la surface du stratifié résultant venu de coulage, à deux couches ou à trois couches.

15. Procédé selon la revendication 14, dans lequel le moule de coulage comporte un film anti-adhérant lié sur la surface intérieure, avant de le revêtir avec une résine durcissable par irradiation ou thermodurcissable.

16. Procédé selon la revendication 14, dans lequel le moule de coulage est dépourvu de film anti-adhérant.

17. Procédé selon la revendication 14, dans lequel deux surfaces intérieures du moule de coulage sont revêtues avec un type de résine durcissable par irradiation ou thermodurcissable.

18. Procédé selon la revendication 14, dans lequel deux surfaces intérieures du moule de coulage sont revêtues avec différents types de résine durcissable par irradiation ou thermodurcissable.